# EUROPÄISCHE PATENTSCHRIFT

(11) **EP 1 972 399 B1**
(45) Veröffentlichungstag und Bekanntmachung des Hinweises auf die Patenterteilung: **04.05.2016**
(21) Anmeldenummer: 08005455.4
(22) Anmeldetag: 25.03.2008
(51) Int. Cl.: B23C 5/10, B23C 5/28

(54) **Kugelbahnfraeser, Werkzeugsystem mit einem Kugelbahnfraeser sowie Verfahren zur Anbringung eines Kugelbahnfraesers**
Ball end mill, tool system with a ball end mill and method for attaching a ball end mill
Fraise à tête sphérique, système d'outil doté d'une fraise à tête sphérique et méthode pour attacher une fraise à tête sphérique

(30) Priorität: 23.03.2007 DE 102007014575; 13.07.2007 DE 102007033056
(43) Veröffentlichungstag der Anmeldung: 24.09.2008
(73) Patentinhaber: Gühring OHG, 72458 Albstadt (DE)
(72) Erfinder: Bozkurt , Lutfi, 72474 winterlingen (DE)
(74) Vertreter: Meitinger, Thomas Heinz

(56) Entgegenhaltungen:
- EP-A- 1 029 620
- EP-A- 1 125 667
- EP-A1- 1 147 841
- WO-A-02/057040
- DE-A1- 10 348 061
- DE-A1- 19 945 360
- DE-A1-102005 014 337
- JP-A- H03 149 114
- JP-A- 2002 154 008
- US-A- 4 934 881
- US-A- 5 094 573
- US-A1- 2003 095 841
- US-B2- 7 374 374

## Beschreibung

Die Erfindung betrifft einen Kugelbahnfräser nach dem Oberbegriff des Anspruchs 1, ein Werkzeugsystem mit einem Kugelbahnfräser sowie ein Verfahren zur Anbringung eines Kugelbahnfräsers an einer Werkzeugmaschine.

### Stand der Technik

Kugelbahnfräser sind in unterschiedlichen Ausführungsformen bereits bekannt geworden. Sie dienen insbesondere dazu, eine Kugelbahn herzustellen, wie sie bei homokinetischen Antriebswellen zur Anwendung kommt.

In der deutschen Offenlegungsschrift DE 199 45 360 A1 wird ein Kugelbahnfräser mit zwei Schneidplatten beschrieben, wobei wenigstens eine der Schneidplatten einer Einstellvorrichtung zugeordnet ist, mit deren Hilfe ein Verschleiß der Schneidkante dieser Schneidplatte ausgeglichen werden kann.

Die EP 1 125 667 A2 offenbart einen Kugelbahnfräser mit zwei daran angelöteten Schneiden. Die JP 2002/154008 offenbart einen Kugelbahnfräser mit einer durch eine Schraubverbindung klemmend festgesetzten, zwei Schneiden aufweisenden Schneidplatte.

### Aufgabe und Vorteile der Erfindung

Der Erfindung liegt die Aufgabe zugrunde, die Herstellung von Kugelbahnen zu verbessern.

Diese Aufgabe wird durch die Merkmale der Ansprüche 1 und 13, gelöst.

In den abhängigen Ansprüchen sind vorteilhafte und zweckmäßige Weiterbildungen der Erfindung angegeben.

Zunächst geht die Erfindung von einem Kugelbahnfräser, insbesondere zur Herstellung eines homokinetischen Antriebgelenks aus, der wenigstens einen Fräskopf umfasst, an dem eine Schneide angeordnet ist. Der Kern der Erfindung liegt nun darin, dass der Fräskopf aus Vollhartmetall besteht. Vollhartmetall ist besonders widerstandsfähig, wodurch die Standzeit des Werkzeugs insbesondere im Hinblick auf Abnutzung durch abrasiv wirkende Späne während eines Bearbeitungsvorgangs verbessert wird.

In einer bevorzugten Ausgestaltung der Erfindung schließt sich einstückig an den Fräskopf ein Schaftabschnitt an, der somit auch aus Vollhartmetall besteht. Der Schaftabschnitt kann dazu ausgelegt sein, in einen Werkzeughalter eingesetzt zu werden. Beispielsweise wird der Schaftabschnitt in einen entsprechenden Aufnahmebereich eines Werkzeughalters eingeschrumpft. Der Fräskopf kann auch auf andere Weise mit dem Werkzeughalter verbindbar sein, z.B. ist der Fräskopf einschraubbar. Der Werkzeughalter kann mit einer HSK-Schnittstelle ausgestattet sein. Durch diese Vorgehensweise bildet der Kugelbahnfräser mit dem Werkzeughalter eine besonders steife Verbindung.

In einer überdies bevorzugten Ausgestaltung der Erfindung kann der Schaftabschnitt des Kugelbahnfräsers auch in ein Zwischenstück aus Stahl eingeschrumpft sein. Das Zwischenstück aus Stahl wiederum ist vorzugsweise für eine Verbindung mit einem Werkzeughalter ausgelegt. Es ist auch denkbar, dass das Zwischenstück aus Vollhartmetall besteht.

Aufgrund der hohen Steifigkeit von Vollhartmetall ist Vollhartmetall gegenüber schlagartiger Krafteinwirkung bruchgefährdet. Stahl hingegen hat eine hohe Zähigkeit. Durch eine Kombination eines Stahlschaftes mit eingeschrumpften Kugelbahnfräsers wird eine Einheit gebildet, die sowohl die Vorteile des Stahls als auch die Vorteile des Vollhartmetalls nutzt.

Grundsätzlich kann der Fräskopf ein oder mehrere Schneidplatten aufweisen. Diese können aus polykristallinen Diamant (PKD), kubischem Bohrnitrit (CBN) oder einem ähnlichen Hartstoff, gegebenenfalls einer Kombination von Hartstoffen bestehen. Vorzugsweise sind die Schneiden in den Vollhartmetallkopf eingelötet.

In einer weiteren besonders bevorzugten Ausgestaltung der Erfindung ist ein schneidenfreier umfänglich umlaufender Abschnitt am Fräskopf vorgesehen, der sich zwischen dem Ende von Spannuten am Fräskopf und einem Einspannschaft erstreckt. Insbesondere wenn der umlaufende Abschnitt zylindrisch ist oder zumindest einen zylindrischen Anteil aufweist, kann hierdurch der Rundlauf eines Kugelbahnfräsers leicht ermittelt werden. Außerdem wird durch diesen durch Spannuten oder Schneiden nicht gestörten Abschnitt des Fräskopfs die Stabilität des Fräskopfs erhöht, was sich im Hinblick auf die Genauigkeit vorteilhaft auswirkt.

Vorzugsweise erstreckt sich der umlaufende Abschnitt zwischen dem Ende von Spannuten und einer Plananlage am Fräskopf, an welcher sich der Einspannschaft anschließt. Die Plananlage bildet sozusagen den Übergang zum Einspannschaft. Die Plananlage liegt im eingesetzten Zustand des Fräskopfs vorzugsweise an einer entsprechenden Gegenanlage an, womit sich der Fräskopf stabil spannen lässt. Der umfänglich umlaufende Abschnitt ist vorzugsweise breiter als 3 mm, insbesondere breiter als 4 mm. In einem bevorzugten Ausführungsbeispiel weist der umlaufende Abschnitt eine Breite von größer 5 mm auf. Grundsätzlich kann die Breite in einem Bereich von 5 bis 15 mm in vorteilhafter Weise liegen.

Mehrere Schneiden sind vorgesehen, wobei jeder Schneide bevorzugt ein Kühlkanal zugeordnet ist, der zumindest im Fräskopf separat zu den jeweils anderen Kühlkanälen läuft. Damit kann,ohne wesentliche Schwächung des Fräskopfs jeder Schneide ein separater Kühlkanal zugeordnet werden. Hierdurch wird das Kühl- und Schmierverhalten deutlich verbessert. Vorzugsweise laufen die Kühlkanäle auch separat in einem an den Fräskopf anschließenden Einspannschaft. Die Stabilitätsvorteile der separat geführten Kühlkanäle ergeben sich dann auch im Einspannschaft.

Mehrere Ausnehmungen sind mit Schneiden vorgesehen, wobei Kühlkanäle in den Ausnehmungen derart austreten, dass Kühlmittel unmittelbar auf einer Schneidkante der in der jeweiligen Ausnehmung angeordneten Schneide bei Kühlmittelbeaufschlagung spritzt. Die Kühlhanalanstritte sind derart beschaffen, dass bei Kühlmittelbeaufschlagung das Kühlmittel auf einen übergang an der Schneidkante der jeweiligen Schneide von einem kleinen Radius bzw. einer Fase im Stirnbereich zu einem vergleichsweise größeren Radius im Seitenbereich spritzt. Damit lässt sich eine optimierte Spanabfuhr realisieren.

Bei einem Werkzeugsystem mit einem Kugelbahnfräser, wie beschrieben, liegt ein wesentlicher Aspekt darin, dass der Kugelbahnfräser in den Werkzeughalter eingeschrumpft ist. Dadurch wird eine besonders innige Verbindung zwischen Kugelbahnfräser und Werkzeughalter geschaffen.

Besonders bevorzugt ist es, wenn der Werkzeughalter und der Kugelbahnfräser derart aufeinander abgestimmt sind, dass der Kugelbahnfräser ohne weiteres ein- und ausschrumpfbar ist. Hierzu sind die Materialien von Kugelbahnfräser und Werkzeughalter zu berücksichtigen und dementsprechend die Geometrien fest zu legen, so dass einerseits ein fester Sitz im kalten Zustand gewährleistet ist, aber andererseits ein Ausschrumpfen durch Erwärmen des Werkzeughalters ausgeführt werden kann. Besonderes Augenmerk auf die Geometrien ist dann zu legen, wenn sowohl der Werkzeughalter mit einer Aufnahme als auch der einzuschrumpfende Abschnitt des Kugelbahnfräsers, z.B. ein Zwischenstück aus Stahl sind.

Um die Standzeit eines Werkzeugsystems aus Kugelbahnfräser und Werkzeughalter weiter zu verbessern, wird überdies vorgeschlagen, dass der Werkzeughalter mit einem Schutzmantel aus einer harten Schicht, z.B. einer Vorhartmetallschicht versehen ist.

### Ausführungsbeispiel

Ein Ausführungsbeispiel der Erfindung ist in den Zeichnungen dargestellt und wird unter Angabe weiterer Vorteile und Einzelheiten nachstehend näher erläutert. Es zeigen
Figur 1 in einer Seitenansicht einen Werkzeughalter mit einem eingesetzten Kugelbahnfräser,
Figur 2a den Fräskopf der Ausführungsform nach
und 2b Figur 1 in Alleinstellung in einer Seitenansicht und einer Draufsicht ohne Schneidplatten und
Figur 3 ein Zwischenstück zwischen Fräskopf und Werkzeughalter entsprechend der Ausführungsform gemäß Figur. 1 in Alleinstellung in Seitenansicht.

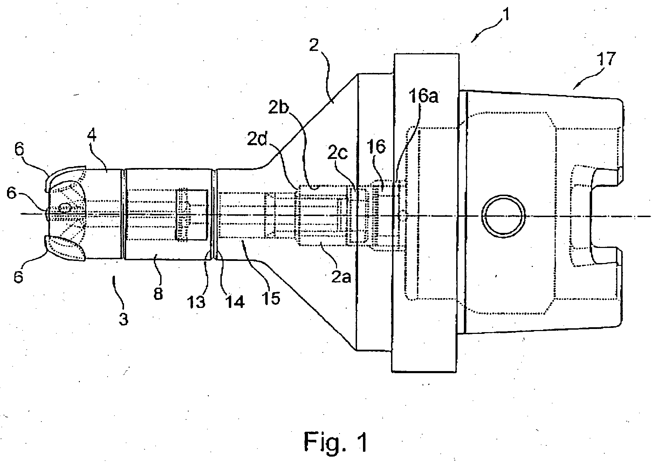

In Figur 1 ist ein Werkzeugsystem 1 dargestellt, dass einen Werkzeughalter 2 und einen Kugelbahnfräser 3 umfasst.

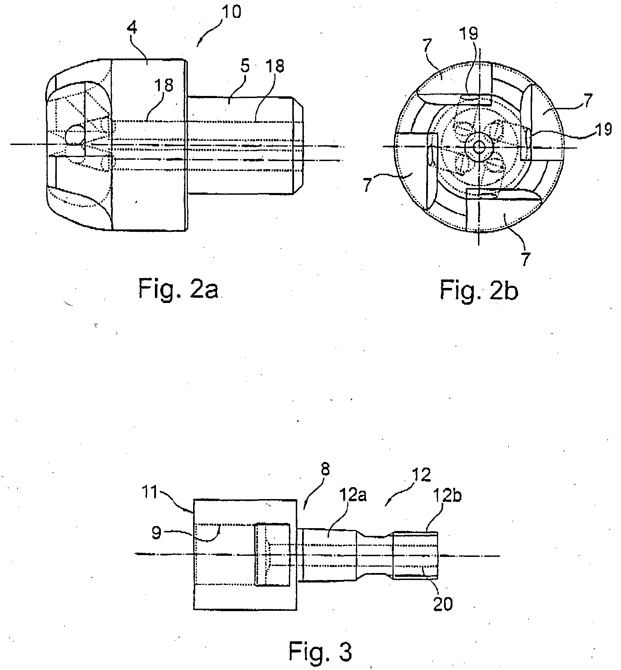

Der Kugelbahnfräser 3 besteht aus einem Fräskopf 4 an den sich einstückig ein Schaft 5 anschließt (siehe insbesondere Figur 2a). Der Fräskopf 4 und der Schaft 5 bestehen aus Vollhartmetall. In den Fräskopf 4 sind vier Schneidplatten 6 aus einern Hartstoff, z.B. CBN oder PKD eingesetzt, z.B. eingelötet. Vor der Schnittfläche einer Schneidplatte 6 ist jeweils ein Spanraum 7 ausgebildet (siehe insbesondere Figur 2b). Da der Fräskopf 4 aus Vollhartmetall besteht sind die Begrenzungsflächen des Spanraums, abgesehen von den Bereichen, wo eine jeweilige Schneidplatte 6 ausgebildet ist, aus vollhartmetall. Dadurch ist der Fräskopf besonders widerstandsfähig gegenüber abrasiver Abnutzung, z.B. gegen entstehende Späne, die über den Spanraum abgeführt werden.

Insgesamt erhöht sich dadurch die Standzeit eines derartigen Fräskopfs.

Der Schaft 5 ist in eine Bohrung 9 eines Zwischenstücks 8 eingeschrumpft.

Um eine exakte Positionierung des Fräskopfes mit Schaft 5 im Zwischenstück 8'zu erreichen, weist der Fräskopf 4 vorzugsweise eine geschliffene Plananlage 10 auf, die an einer Stirnseite 11 des Zwischenstücks 8 anliegt.

Das Zwischenstück 8 besitzt einen Zapfenfortsatz 12 an welchem ein Sitzbereich 12a und ein Außengewinde 12b ausgebildet ist.

Das Zwischenstück 8 besteht vorzugsweise aus Stahl. Damit ist der Kugelbahnfräser 3 in einem Bereich, in welchem er einem besonderen Verschleiß ausgesetzt ist, aus besonders widerstandsfähigen vollhartmetall und in einem Abschnitt, in welchem eine gewisse Zähigkeit gefordert ist, um eine geringere Bruchempfindlichkeit zu erhalten, aus vergleichsweise zäherem Material, nämlich Stahl ausgeführt.

Der Kugelbahnfräser 3 mit Zwischenstück 8 lässt sich über den Zapfenfortsatz 12 bzw. des dort ausgebildeten Außengewindes 12b in den dafür ausgestalteten Werkzeughalter 2 einsetzen und dort verschrauben. Im Werkzeughalter 2 ist hierzu ein hülsenförmiges Bauteil 2a vorgesehen, das in einer Bohrung 2b des Werkzeughalters 2 sitzt.

Das hülsenförmige Bauteil 2a besitzt ein Innengewinde, das zum Außengewinde 12b des Zapfenfortsatzes 12 des Zwischenstücks 8 passt. Außerdem besitzt das hülsenförmige Bauteil 2a einen Innensechskant 3c, durch welches das hülsenförmige Bauteil 2a über ein entsprechendes Werkzeug gedreht werden kann, um ein Aufschrauben auf das Außengewinde 12b zu ermöglichen. Eine andere Eingreifstruktur für ein Werkzeug ist selbstverständlich auch möglich. Durch Drehen wird der Zapfenfortsatz 12 in den Werkzeughalter 2 gezogen, wobei Plananlagen 13, 14 des Zwischenstücks 8 bzw. des Werkzeughalters 2 zur Anlage kommen. Das hülsenförmige Bauteil 2a stützt sich dabei an einer Flanke 2d der Bohrung 2b des Werkzeughalters 2a ab.

Damit sich beim Lösen des Kugelbahnfräsers 3, der vorzugsweise im Bereich 15 einen Presssitz mit dem Werkzeughalter 2 eingeht, das hülsenförmige Bauteil 2a beim herunterschrauben von, Außengewinde. 12 an einer Stelle abstützen kann, ist ein Schraubenelement 16 vorgesehen, das am Ende der Bohrung 2b sitzt. Außerdem sollte gewährleistet sein, dass ein Werkzeug durch das Schraubenelement 16 hindurch den z.B. Innensechskant 2c des hülsenförmigen Bauteils 2a erreichen kann. Das Schraubenelement 16 kann seinerseits einen Innensechskant aufweisen, um dieses mit einem entsprechendem Werkzeug in die Bohrung 2b einschrauben zu können. Dazu weist das Schraubenelement 16 ein Außengewinde 16a und der entsprechende Abschnitt der Bohrung 2b ein passendes Innengewinde auf.

Der Werkzeughalter besitzt vorzugsweise eine HSK-Schnittstelle.

Des Weiteren besitzt sowohl der Schaft 5 als auch der Fräskopf 4 einen Durchgang 18 zu jedem Kühlkanal 19 für jede Schneidplatte 6. Damit kann unmittelbar an einer Schnittstelle Kühlmedium zugeführt, werden. Entsprechend sind Durchgänge 20 im Zwischenstück 8 vorgesehen, die zu den Durchgängen 18 im Schaft 5 passend ausgestaltet sind, so dass ein Übergang von Kühlmedium stattfinden kann. Sowohl das hülsenförmige Bauteil 2a sowie das Schraubenelement 16 sind im Zentrum offen, womit Kühlmedium an die Schneidplatten 6 des Kugelbahnfräsers 3 über den Schnittstellenbereich 17 des Werkzeughalters zugeführt werden kann..

### Bezugszeichenliste

- 1: Werkzeugsystem
- 2: Werkzeughalter
- 2a: hülsenförmiges Bauteil.
- 2b: Bohrung
- 2c: Innensechskant
- 2d: Flanke
- 3: Kugelbahnfräser
- 4: Fräskopf
- 5: Schaft
- 6: Schneidplatte
- 7: Spanraum
- 8: Zwischenstück
- 9: Bohrung
- 10: Plananlage
- 11: Stirn
- 12: Zapfenfortsatz
- 12a: Sitzbereich
- 12b: Außengewinde
- 13: Plananlage
- 14: Plananlage
- 15: Plananlage
- 16: Schraubenelement
- 16a: Außengewinde
- 17: HSK-Schnittstelle
- 18: Durchgang
- 19: Kühlkanalaustritt
- 20: Durchgang

## Patentansprüche

1. Kugelbahnfräser (3)mit einem Fräskopf (4), wobei der Fräskopf (4) aus Vollhartmetall besteht, und wobei mehrere Ausnehmungen (7) mit Schneiden (6) vorgesehen sind, **dadurch gekennzeichnet, dass** Kühlkanäle in den Ausnehmungen an Kühlkanalaustritten (19) derart austreten, dass Kühlmittel unmittelbar auf Schneidkanten der in den Ausnehmungen (7) angeordneten Schneiden (6) bei Kühlmittelbeaufschlagung spritzt, wobei die Kühlkanalaustritte (19) derart beschaffen sind, dass bei Kühlmittelbeaufschlagung das Kühlmittel auf einen Übergang an der Schneidkante der jeweilige Schneide von einem kleinen Radius bzw. einer Fase im Stirnbereich zu einem vergleichsweise größeren Radius im Seitenbereich spritzt.

2. Kugelbahnfräser nach Anspruch 1, **dadurch gekennzeichnet, dass** sich einstückig an den Fräskopf (4) ein Schaftabschnitt (5) anschließt.

3. Kugelbahnfräser nach einem der vorhergehenden Ansprüche, **dadurch gekennzeichnet, dass** der Schaftabschnitt (5) in ein Zwischenstück (8) aus Stahl eingeschrumpft ist, wobei insbesondere das Zwischenstück mit einem Werkzeughalter (2)verbindbar ist.

4. Kugelbahnfräser nach einem der vorhergehenden Ansprüche, **dadurch gekennzeichnet, dass** der Schaftabschnitt (5) dazu ausgelegt ist, in einem Werkzeughalter (2) eingesetzt zu werden.

5. Kugelbahnfräser nach einem der vorhergehenden Ansprüche, **dadurch gekennzeichnet, dass** der Fräskopf (4)mit mehreren Schneidplatten (6) aus Hartstoff versehen ist.

6. Kugelbahnfräser nach einem der vorhergehenden Ansprüche, **dadurch gekennzeichnet, dass** ein schneidenfreier, umfänglich umlaufender Abschnitt am Fräskopf vorgesehen ist, der sich zwischen dem Ende von Spannuten am Fräskopf (4)und einem Einspannabschnitt (5) erstreckt.

7. Kugelbahnfräser nach Anspruch 6, **dadurch gekennzeichnet, dass** sich der umlaufende Abschnitt zwischen dem Ende von Spannuten und einer Plananlage des Fräskopfs (4) erstreckt, an welche sich ein Einspannschaft anschließt.

8. Kugelbahnfräser nach Anspruch 6 oder 7, **dadurch gekennzeichnet, dass** der umlaufende Abschnitt zylindrisch ist oder einen zylindrischen Anteil umfasst.

9. Kugelbahnfräser nach einem der vorhergehenden Ansprüche, **dadurch gekennzeichnet, dass** jeder Schneide (6) ein Kühlkanal mit einem Kühlkanalaustritt (19) zugeordnet ist, der zumindest im Fräskopf separat zu den jeweils anderen Kühlkanälen läuft.

10. Werkzeugsystem mit einem Kugelbahnfräser (3)nach einem der vorhergehenden Ansprüche sowie einem Werkzeughalter (2), **dadurch gekennzeichnet, dass** der Kugelbahnfräser (3) in den Werkzeughalter (2) eingeschrumpft ist.

11. Werkzeugsystem nach Anspruch 1 0 , **dadurch gekennzeichnet, dass** der Werkzeughalter (2) und der Kugelbahnfräser (3) derart aufeinander abgestimmt sind, dass der Kugelbahnfräser (3), ohne weiteres ein- und ausschrumpfbar ist.

12. Werkzeugsystem nach einem der Ansprüche 10 oder 11, **dadurch gekennzeichnet, dass** der Werkzeughalter (2) einen Schutzmantel aus einer harten Schicht trägt.

13. Verfahren zur Anbringung eines Kugelbahnfräsers (3) an einer Werkzeugmaschine, **dadurch gekennzeichnet, dass** der Kugelbahnfräser (3)nach einem der Ansprüche 1 bis 9 mit einem Werkzeughalter (2) der Werkzeugmaschine durch Einschrumpfen verbunden wird.

## Claims

1. Ball path milling cutter (3) with a milling head (4), wherein the milling head (4) is made of solid carbide, **characterized in that** multiple recesses (7) with cutting edges (6) and cooling channels in the recesses of the cooling channel outlets (19) emerge to the extent that coolant is injected directly onto the cutting edges of the blades (6) arranged in the recesses (7) with coolant application, wherein the cooling channel outlets (19) are such that the coolant application injects to a transition point at the cutting edge of each blade from a small radius or a chamfer in the front area to a relatively larger radius in the side area.

2. Ball path milling cutter according to claim 1, **characterized in that** a shaft section (5) integrally formed adjoins to the milling head (4).

3. Ball path milling cutter according to one of the preceding claims, **characterized in that** the shaft section (5) is shrunk to an intermediate piece (8) made of steel, wherein the intermediate piece in particular is connectable with a tool holder (2).

4. Ball path milling cutter according to one of the preceding claims, **characterized in that** the shaft section (5) is designed to be used in a tool holder (2).

5. Ball path milling cutter according to one of the preceding claims, **characterized in that** the cutter head (4) is provided with several cutting plates (6) made of carbide.

6. Ball path milling cutter according to one of the preceding claims, **characterized in that** a peripherally circumferential portion without blades is provided on the milling head, which extends between the end of the flutes on the milling head (4) and a clamping section (5).

7. Ball path milling cutter according to claim 6, **characterized in that** the circumferential section extends between the end of the flutes and a face contact of the milling head (4), which is followed by a clamping shank.

8. Ball path milling cutter according to claim 6 or 7, **characterized in that** the peripheral portion is cylindrical or comprises a cylindrical portion.

9. Ball path milling cutter according to one of the preceding claims, **characterized in that** (6) a cooling channel associated with a cooling channel outlet (19), running separately at least to the respective other cooling passages in the cutting head, is assigned to each blade.

10. Tool system with a ball path milling cutter (3) according to one of the preceding claims and a tool holder (2), **characterized in that** the ball path milling cutter (3) is shrunk into the tool holder (2).

11. Tool system according to claim 10, **characterized in that** the tool holder (2) and the ball path milling cutter (3) are matched to one another so that the ball path milling cutter (3) is readily suitable for shrink gripping and shrink releasing.

12. Tool system according to one of claims 10 or 11, **characterized in that** the tool holder (2) carries a protective coating of a hard layer.

13. Method for attaching a ball path milling cutter (3) on a machine tool, **characterized in that** the ball path milling cutter (3) according to one of the claims 1 to 9 with a tool holder (2) of the machine tool are connected by shrinking.

## Revendications

1. Fraise sphérique (3) avec une tête de fraisage (4), alors que cette dernière est faite de carbure monobloc **caractérisé par** la pluralité des creux (7) avec des arêtes de coupe (6), tandis que les canaux de refroidissement dans les creux des sorties de canal de refroidissement (19) s'ouvrent lorsque le liquide de refroidissement est injecté directement aux arêtes de coupe des lames disposées (6) des creux (7) avec application du liquide de refroidissement, alors que les sorties des canaux de refroidissement (19) font en sorte que le liquide de refroidissement est injecté à un point de transition à l'arête de coupe de chaque lame dans un petit rayon ou un chanfrein à un rayon relativement plus grand sur les côtés.

2. Fraise sphérique selon la Revendication 1, **caractérisée en ce que** la section de l'axe (5) intégralement formée est reliée à la tête de fraisage (4).

3. Fraise sphérique selon l'une des revendications précédentes **caractérisée par** la section de l'axe (5) réduite à une pièce intermédiaire (8) en acier, qui peut être relié à un porte-outil (2).

4. Fraise sphérique selon l'une des revendications précédentes **caractérisée par** la section de l'axe (5) conçue pour une utilisation dans un porte-outil (2).

5. Fraise sphérique selon l'une des revendications précédentes **caractérisée par** une tête de fraisage (4), avec plusieurs plaquettes de coupe (6) faites de carbure.

6. Fraise sphérique selon l'une des revendications précédentes **caractérisée par** une portion périphérique sans coupe fournie sur la tête de fraisage, qui s'étend des extrémités des cannelures de la tête de fraisage (4) jusqu'au segment de serrage (5).

7. Fraise sphérique selon la revendication 6, **caractérisée par** la section périphérique entre les extrémités des cannelures et une section frontale de la tête de fraisage (4) qui est suivie d'une tige de fixation.

8. Fraise sphérique selon l'une des revendications 6 ou 7 **caractérisée par** la partie ériphérique cylindrique ou composée d'une partie cylindrique.

9. Fraise sphérique selon l'une des revendications précédentes **caractérisée par** (6) un canal de refroidissement associé avec une sortie (19) de canal de refroidissement qui fonctionne séparément des autres passages au moins dans la tête de fraisage.

10. Système d'outil ayant une fraise sphérique (3) selon l'une des revendications précédentes et un porte-outil (2) **caractérisé par** la fraise sphérique (3) reliée au porte-outil (2) par retrait.

11. Système d'outil selon la revendication 10 **caractérisé en ce que** le porte-outil (2) et la fraise sphérique (3) sont adaptés l'un à l'autre de sorte que la fraise sphérique (3) est à la fois acilement rétractable et facilement amovible.

12. Système d'outils selon l'une des revendications 10 ou 11 **caractérisé par** le porte-outil (2) couvert par une couche de protection dure.

13. Une méthode pour relier une fraise sphérique (3) à une machine-outil **caractérisée en ce que** la fraise sphérique (3) selon l'une des revendications de 1 à 9 est reliée par retrait avec un porte-outil (2) de la machine-outil.
